**Europäisches Patentamt**

**European Patent Office**

**Office européen des brevets**

(19)

(11) Veröffentlichungsnummer : **0 403 856 B1**

(12) # EUROPÄISCHE PATENTSCHRIFT

(45) Veröffentlichungstag der Patentschrift :
**04.01.95 Patentblatt 95/01**

(51) Int. Cl.$^6$ : **H04L 25/49**

(21) Anmeldenummer : **90110409.1**

(22) Anmeldetag : **01.06.90**

(54) **Verfahren und Schaltungsanordnung zur Übertragung eines Hilfsdatenstroms.**

(30) Priorität : **15.06.89 CH 2242/89**

(43) Veröffentlichungstag der Anmeldung :
**27.12.90 Patentblatt 90/52**

(45) Bekanntmachung des Hinweises auf die
Patenterteilung :
**04.01.95 Patentblatt 95/01**

(84) Benannte Vertragsstaaten :
**AT CH DE GB LI NL SE**

(56) Entgegenhaltungen :
**EP-A- 0 176 015**
**EP-A- 0 250 729**
**FR-A- 2 535 556**

(73) Patentinhaber : **SIEMENS-ALBIS**
**AKTIENGESELLSCHAFT**
**PV/Patente und Verträge**
**Postfach**
**CH-8047 Zürich (CH)**
(84) **CH LI**
Patentinhaber : **SIEMENS**
**AKTIENGESELLSCHAFT**
**Wittelsbacherplatz 2**
**D-80333 München (DE)**
(84) **DE GB NL SE AT**

(72) Erfinder : **Wenger, Bruno**
**Aubrigstrasse 21**
**CH-8804 Au (CH)**

EP 0 403 856 B1

**Beschreibung**

Die vorliegende Erfindung betrifft ein Verfahren zur Übertragung eines Datenstromes nach dem Oberbegriff des Patentanspruchs 1 sowie eine Schaltungsanordnung zur Durchführung des Verfahrens.

Zur digitalen Datenübertragung in optischen Systemen werden in der Regel 2-Pegel-Codes verwendet, die im Vergleich zu 3-Pegel-Codes geringere Anforderungen an die Sende- und Empfangseinheiten stellen. In der Zeitschrift "Technische Mitteilungen PTT", 7/1979, Seite 256 wird darauf hingewiesen, dass als 2-Pegel-Code für diese Anwendung der CMI (Coded Mark Inversion) - Code speziell geeignet ist. Neben dem Bildungsgesetz des CMI-Codes werden auch dessen Vorteile (hohe Taktinformation, Fehlererkennungsmöglichkeit, Codetransparenz, Leistungsspektrum ohne Anteil tiefer Frequenzen, einfache Codewandler) beschrieben.

Dem Bildungsgesetz des CMI-Codes ist zu entnehmen, dass entsprechend den zu übertragenden Daten die Bitkombinationen '11' oder '00' (für ein Datenbit = '1') oder die Bitkombination '01' (für ein Datenbit = '0') an die Übertragungsleitung abgegeben werden. Die im Bildungsgesetz nicht benützte Bitkombination '10' wird in verschiedenen Verfahren zur gleichzeitigen Übertragung eines zweiten Datenstromes verwendet, so dass über eine Übertragungsleitung simultan ein Hauptdatenstrom und ein Hilfsdatenstrom übertragen werden können. Das Bildungsgesetz des CMI-Codes wird deshalb entsprechend dem angewählten Verfahren erweitert, was zu einem modifizierten CMI-Code führt (MCMI-Code). Da der binäre bzw. pseudoternäre CMI-Code für die Datenbits '0' und '1' jeweils eine der drei Bitkombinationen '11', '00' oder '01' überträgt, wird öfters ein ternärcodiertes in ein CMI-codiertes Datensignal umgewandelt.

In der CH-PS 666 150 wird ein Verfahren angegeben, mit dem das Konzept des digitalen Hilfskanals für Lichtwellenleitersysteme mit der HDB-3/MCMI-Codeumsetzung verwirklicht wird. Ein Datenbit = '1' bzw. = '0' wird dabei über den Hilfskanal übertragen, indem ein ausgewähltes Bitmuster '110011' bzw. '001100' durch ein modifiziertes Bitmuster ('011011', '100111', '101101 bzw. '001001, '000110', '010010') ersetzt wird, das auf der Empfangsseite wieder eindeutig als Modifikation detektiert werden kann. Nachteilig bei diesem Verfahren ist, dass falls keine Daten über den Hauptkanal übertragen werden, keine Daten über den Hilfskanal übertragen werden können, weil die Bitmuster '110011' und '001100' im CMI-Code nicht auftreten, wenn dem HDB-3/MCMI-Converter nur HDB-3-codierte Datennullen zugeführt werden.Weiterhin ist es möglich, dass die Bitmuster '110011' bzw. '001100', die durchschnittlich mit einer hohen Rate erscheinen, vereinzelt nur in grösseren Zeitabständen auftreten. Dies führt zu einer zeitweise starken Erhöhung des jitters im übertragenen Hilfsdatenstrom.

In der EP-A1 - 0 250 729 wird ein Verfahren beschrieben, bei dem für ein zu übertragendes Datenbit = '1' zuerst eine Bitkombination '11' und daraufhin eine der folgenden Bitkombinationen '00' durch eine Bitkombination '10' ersetzt wird. Dieses Verfahren, das eine Datenübertragung auch dann erlaubt, wenn keine Daten über den Hauptkanal übertragen werden, wird nachfolgend im Zusammenhang mit der HDB-3- zu MCMI-Codewandlung kurz erläutert.

In einer ersten Stufe wird das ternäre HDB-3-Signal in zwei binäre Signale pc bzw. nc aufgeteilt, die die positiven bzw. die negativen Pulse des HDB-3-codierten Signals weiterführen. In einer weiteren Stufe werden die Signale pc und nc derart verändert, dass für ein zu übertragendes Bit = '1' des Hilfsdatenstromes beim Eintreffen eines Pulses des Signals pc gleichzeitig ein zusätzlicher Puls auf das Signal nc aufgeprägt wird und dass beim nachfolgenden Eintreffen eines Pulses des Signals nc gleichzeitig ein zusätzlicher Puls auf das Signal pc aufgeprägt wird. In einer weiteren Stufe werden die modifizierten Signale pc' und nc' in ein MCMI-codiertes Signal umgewandelt. Ein möglicher Ablauf einer Übertragung eines Hilfsdatenbits $B_{(n)}$ wird nachfolgend in Tabelle 1 angegeben.

Tabelle 1

| | HDB-3-Signal | Hilfsdaten | pc | nc | pc' | nc' | MCMI |
|---|---|---|---|---|---|---|---|
| 1 | 0 | 0 | 0 | 0 | 0 | 0 | 01 |
| 2 | + 1 | 0 | 1 | 0 | 1 | 0 | 11 |
| 3 | - 1 | $B_{(n)}$ 1 | 0 | 1 | 0 | 1 | 00 |
| 4 | 0 | $B_{(n)}$ 1 | 0 | 0 | 0 | 0 | 01 |
| 5 | - 1 | $B_{(n)}$ 1 | 0 | 1 | 0 | 1 | 00 |
| 6 | + 1 | $B_{(n)}$ 1 | 1 | 0 | 1 | 1 | 10 |
| 7 | 0 | $B_{(n)}$ 1 | 0 | 0 | 0 | 0 | 01 |
| 8 | + 1 | $B_{(n)}$ 1 | 1 | 0 | 1 | 0 | 11 |
| 9 | - 1 | $B_{(n)}$ 1 | 0 | 1 | 1 | 1 | 10 |
| 10 | + 1 | 0 | 1 | 0 | 1 | 0 | 11 |

Aus Zeilen 1, 4 und 7 dieser Tabelle wird ersichtlich, dass unabhängig vom Auftreten eines Hilfsdatenbits = '1' ein Bit = '0' des Hauptdatenstromes gemäss dem Bildungsgesetz des CMI-Codes jeweils in die Bitkombination '01' umgewandelt wird. Positive bzw. negative Pulse des HDB-3 Codes werden beim Fehlen eines Hilfsdatenbits jeweils in die Bitkombination '11' bzw. '00' umgewandelt. In den Zeilen 4 - 9 wird ein möglicher Ablauf einer Hilfsdatenübertragung für ein Bit B(n) = '1' gezeigt. Nach der Übertragung des Bits B(n) wird in Zeile 10 die Übertragung eines Hilfsdatenbits B(n + 1) = '1' begonnen. Das Hilfsdatenbit B(n) = '1' wird übertragen, indem zuerst für ein HDB-3-Signal = '+ 1' und nachher für ein HDB-3-Signal = '-1' die Bitkombination '10' im MCMI-Code gebildet wird (Zeile 6 und 9). Zu beachten ist dabei , dass nach dem Eintreffen des Hilfsdatenbits B(n) = '1' eine in Zeile 6 zu erwartende Bitkombination '11' und eine in Zeile 9 zu erwartende Bitkombination '00' durch eine Bitkombination '10' ersetzt werden. Folglich wird jeweils die erste Bitkombination '11' welche auf eine Bitkombination '00' folgt und nachher die nächstfolgende Bitkombination '00' durch die Bitkombination '10' ersetzt. Für dieses Verfahren ergeben sich demnach zwei Nachteile. Da die Übertragung eines Hilfsdatenbits erst mit dem Auftreten eines einem Bit = '-1' folgenden Bit = '+ 1' im HDB-3-Code beginnt, ergibt sich für den Hilfskanal eine relativ tiefe Übertragungsrate. Weiter ist es möglich, dass die Bits '+ 1' und nachfolgend '-1' im HDB-3-Code sehr früh oder stark verzögert auftreten. Dies führt zu einem grossen Jitter bzw. einer schnell und stark ändernden Geschwindigkeit der Datenübertragung über den Hilfskanal. Der vorliegenden Erfindung liegt daher die Aufgabe zugrunde, ein Verfahren und eine Anordnung zur Durchführung des Verfahrens anzugeben, welche die Datenübertragung über den Hilfskanal mit grösserer Übertragungsrate und kleinerem Jitter ermöglichen. Die Lösung dieser Aufgabe gelingt erfindungsgemäss mit einem Verfahren gemäss Anspruch 1 bzw. einer Anordnung gemäss Anspruch 7.

Vorteile des angegebenen Verfahrens und der angegebenen Anordnung sind die erhöhte Übertragungsrate und der reduzierte Jitter bei der Datenübertragung über den Hilfskanal.

Anhand von Zeichnungen wird das erfindungsgemässe Verfahren und eine Schaltungsanordnung zu dessen Durchführung nachfolgend beispielsweise näher erläutert. Dabei zeigt :

Fig. 1      das Blockschaltbild eines nach dem erfindungsgemässen Verfahren betriebenen Übertragungssystems

Fig. 2      eine Logikschaltung LC gemäss dem Blockschaltbild aus Fig. 1

Fig. 3      ein Zeitdiagramm zu Logikschaltung LC

Fig. 4      eine weitere Logikschaltung LD1 gemäss dem Blockschaltbild aus Fig. 1

Fig. 5a      eine weitere Logikschaltung LD2 gemäss dem Blockschaltbild aus Fig. 1

Fig. 5b      die Logikschaltung LD2 im Detail

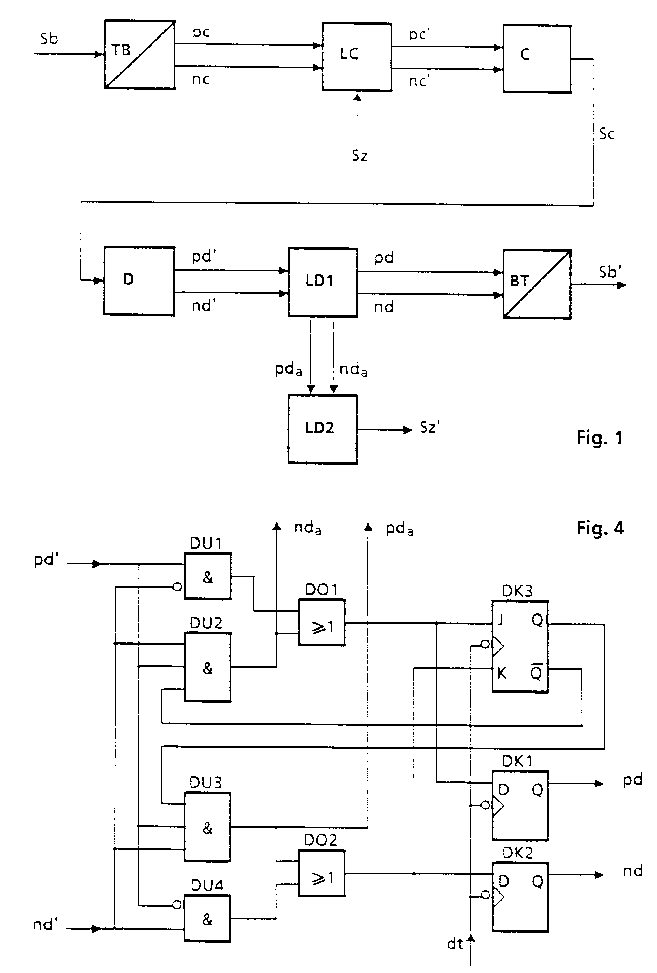

Das Übertragungssystem nach Fig. 1 umfasst einen Ternär/Binärwandler TB, der ein ternärcodiertes HDB-3-Signal Sb in zwei binäre Signale pc bzw. nc aufteilt, welche Pulse aufweisen, die den positiven bzw. den negativen Pulsen des HDB-3-Signals entsprechen. In der nachfolgenden Logikschaltung LC werden die Signale pc und nc entsprechend den zu übertragenden Daten eines Hilfsdatenstromes Sz verändert. Dabei wird für ein zu übertragendes Bit des Hilfsdatenstromes Sz für einen Puls des Signals pc bzw. nc, der einem Puls

EP 0 403 856 B1

des Signals nc bzw. pc folgt, ein zusätzlicher Puls auf das Signal nc bzw. pc aufgeprägt. Weiterhin wird beim nächsten Eintreffen eines Pulses des gegensätzlichen Signals nc bzw. pc ein zusätzlicher Puls auf das Signal pc bzw. nc aufgeprägt. Die Aufpräge-Bedingung, die besagt, dass der erste Puls des Signals pc bzw. nc, bei dem ein Puls auf das gegensätzliche Signal nc bzw. pc aufgeprägt wird, einem Puls des gegensätzlichen Signals nc bzw. pc folgt, muss deshalb eingehalten werden, damit die Signale pd und nd empfangsseitig wieder entsprechend den Signalen pc und nc korrekt erstellt werden können, was für eine spätere fehlerfreie Rückumwandlung der binären Signale pd und nd in ein ternäres Signal wichtig ist. Falls Bipolaritätsverletzungen, wie sie in P. Bocker, Datenübertragung, Band 1, 2. Auflage, Berlin 1983, S. 130 beschrieben werden, im Code des Hauptdatenstromes nicht auftreten, so muss diese Aufpräge-Bedingung, die verhindert, dass Verletzungspulse zur Übertragung eines Hilfsdatenbits verwendet werden, nicht eingehalten werden. Ein aufgeprägter Puls würde in diesem Fall jeweils dem zuletzt eingetroffenen Puls pd bzw. nd entsprechen.

Die derart aus den Signalen pc und nc entstandenen Signale pc' und nc' werden entsprechend der Vorschrift aus nachstehender Tabelle 2 in einem MCMI-Codierer C in ein MCMI-Signal Sc umgewandelt, das nach der Übertragung z.B. über einen Lichtwellenleiter in einem Decoder D wieder in die den Signalen pc' und nc' entsprechenden Signale pd' und nd' verwandelt wird.

Tabelle 2

| pc' | nc' | sc | pd' | nd' |
|-----|-----|-----|-----|-----|
| 0 | 0 | 01 | 0 | 0 |
| 1 | 0 | 11 | 1 | 0 |
| 0 | 1 | 00 | 0 | 1 |
| 1 | 1 | 10 | 1 | 1 |

Der Aufbau des MCMI-Codierers C und des Decodierers D ist hinreichend bekannt und kann auch leicht nachvollzogen werden. Diese Schaltungen werden deshalb nicht näher erläutert.

In der Logikschaltung LD1, der die Signale pd' und nd' zugeführt werden, werden die in der Logikschaltung LC dem Signal pc bzw. nc aufgeprägten Pulse $pd_a$ und $nd_a$ detektiert, aus dem Signal pd' bzw. nd' entfernt und der Lokigschaltung LD2 zugeführt. Die oben erwähnte Aufpräge-Bedingung erlaubt nun festzustellen, welcher der in den Signalen pd' und nd' gleichzeitig auftretenden Pulse pc' = '1' bzw. nc' = '1' aufgeprägt wurde. Gemäss der Aufpräge-Bedingung führt das Signal pd' bzw. nd', das zuletzt einen Puls lieferte, den aufgeprägten Puls. Nach der Entnahme der aufgeprägten Pulse aus den Signalen pd' und nd' gibt die Logikschaltung LD1 zwei resultierende Signale pd und nd, welche den Signalen pc und nc entsprechen, an den Binär/Ternär-Wandler BT weiter, der in der Folge den übertragenen HDB-3-codierten Hauptdatenstrom Sb' abgibt. Aus den der Logikschaltung LD2 zugeführten, abgetrennten (aufgeprägten) Pulsen $pd_a$ und $nd_a$ wird dabei der übertragene Hilfsdatenstrom Sz' gebildet.

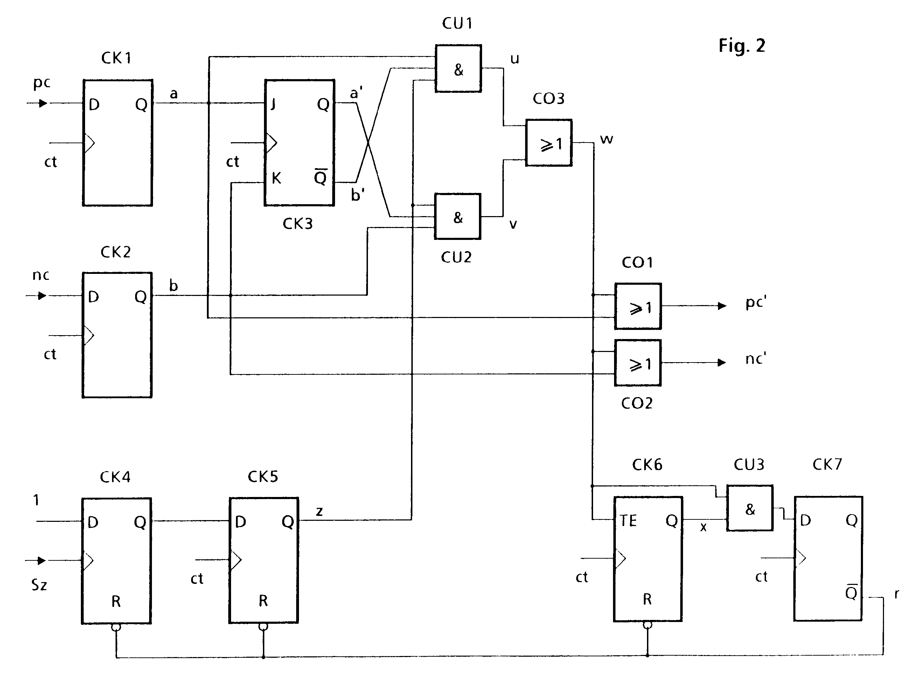

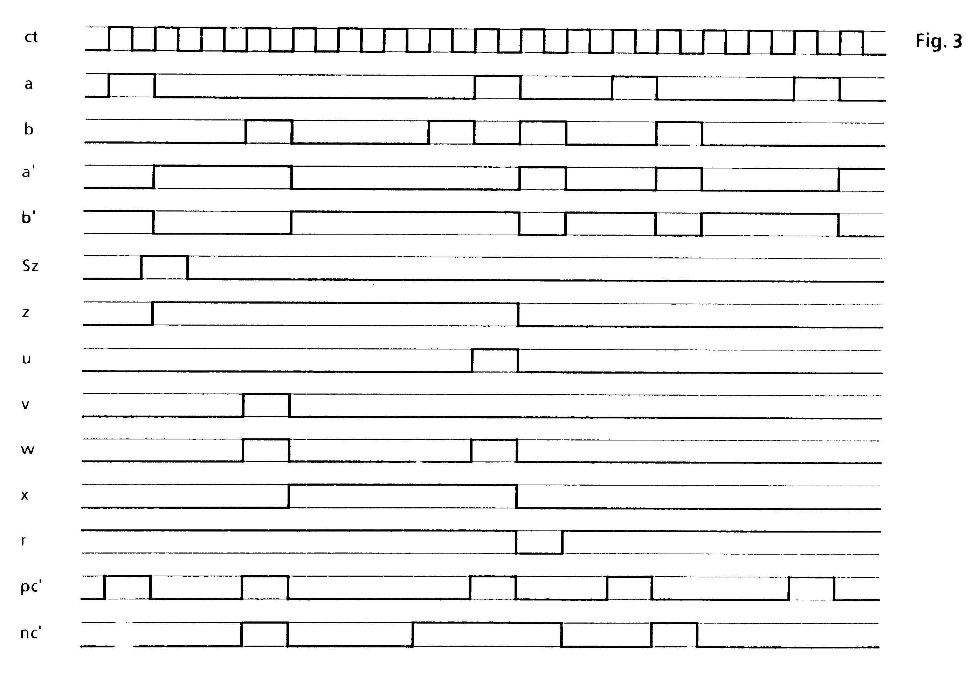

Die in Fig. 2 im Einzelnen dargestellte Logikschaltung LC wird anhand des Zeitdiagramms gemäss Fig. 3 nachfolgend näher erläutert. Ein Puls des Signals pc bzw. nc ergibt am Ausgang der Kippstufe CK1 bzw. CK2 einen Puls des Signals a bzw. b und gleichzeitig (die Torlaufzeiten werden im Zeitdiagramm der Fig.3 vernachlässigt) am Ausgang des Oder-Tores CO1 bzw. CO2 einen Puls pc' bzw. nc'. Falls am Und-Tor CU1 bzw. CU2 nebst einer logisch '1' des Signals a bzw. b eine logisch '1' des Signals b' bzw. a' und des Signals z anliegt, so wird den Oder-Toren CO1 und CO2 über das Oder-Tor CO3 eine logisch '1' zugeführt, so dass am Ausgang der Oder-Tore CO1 und CO2 gleichzeitig eine logisch '1' abgegeben wird. Die Signale a' und b', die am Ausgang der Kippstufe CK3 auftreten, zeigen dabei an, welches Signal a oder b zuletzt eine logisch '1' geführt hat. Das Signal z bleibt nach dem Eintreffen eines Hilfsdatenbits gleich logisch '1', bis die Kippstufen CK4 und CK5 nach der Übertragung des Hilfsdatenbits durch das Signal r zurückgesetzt werden. Die Und-Tore CU1 und CU2 stellen folglich sicher, dass nur ein zusätzlicher Puls auf das Signal nc' bzw. pc' aufgeprägt wird, falls das Hilfsdatenbit noch nicht übertragen wurde und falls die logisch '1' des Signals a bzw. b einer logisch '1' des Signals b bzw. a folgt. Das Signal z wird erst nach der Übertragung des Hilfsdatenbits bzw. nach zweimaligem Auftreten des Wertes logisch '1' für das Signal w zurückgesetzt. Nach dem ersten Auftreten einer logisch '1' im Signal w wird der Ausgang der Kippstufe CK6 gleich logisch '1' gesetzt. Nach dem Eintreffen der nächsten logisch '1' des Signals w wird der invertierende Ausgang der Kippstufe CK7 während einer Taktperiode auf logisch '0' gesetzt, wodurch die Kippstufen CK4, CK5 und CK6 zurückgesetzt werden. Die Signale pc' und nc' werden nachfolgend im MCMI-Codierer C codiert, sodann übertragen und anschliessend im Decodierer D wie-

4

der in die Signale pd' und nd' decodiert.

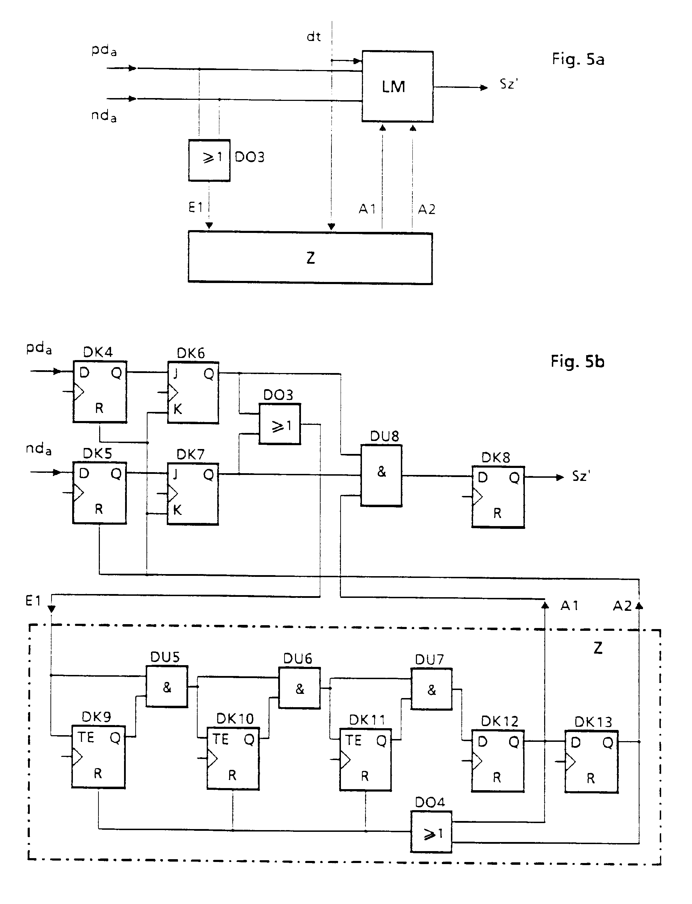

Die in Fig.4 näher dargestellte Logikschaltung LD1, der die Signale pd' und nd' zugeführt werden, hat zwei Aufgaben. Erstens sollen die aufgeprägten Pulse detektiert und an die Logikschaltung LD2 weitergegeben werden. Zweitens sollen die aufgeprägten Pulse aus den Signalen pd' und nd' entfernt und die resultierenden Signale pd und nd an den Binär/Ternär-Wandler BT abgegeben werden. Dabei werden die nicht invertierenden Ausgänge der Kippstufen DK1 und DK3 beim gleichzeitigen Auftreten einer logisch '1' des Signals pd' und logisch '0' des Signals nd' über das Und-Tor DU1 und das Oder-Tor DO1 auf logisch '1' gesetzt. Beim gleichzeitigen Auftreten einer logisch '1' des Signals nd' und logisch '0' des Signals pd' werden der nichtinvertierende Ausgang der Kippstufe DK2 und der invertierende Ausgang der Kippstufe DK3 über das Und-Tor DU4 und das Oder-Tor DO2 auf logisch '1' gesetzt. Im Gegensatz zu den Kippstufen DK1 und DK2 bleibt in der Kippstufe DK3 der zuletzt durch einen Puls pd' oder nd' gesetzte Zustand bis zum nächsten Puls des Signals pd' oder nd' erhalten. Beim gleichzeitigen Auftreten von logisch '1' der Signale pd' und nd' wird abhängig vom Zustand der Kippstufe DK3 der Ausgang des Und-Tores DU2 oder DU3 logisch '1', was gleichzeitig einem aufgeprägten Puls $nd_a$ bzw. $pd_a$ entspricht. Der aufgeprägte Puls $nd_a$ bzw. $pd_a$ wird vom Ausgang des Und-Tores DU2 bzw. DU3 einerseits an die Logikschaltung LD2 und andererseits als Ersatz des nicht aufgeprägten Pulses, der durch das Und-Tor DU1 bzw. DU3 gesperrt wird, an das Oder-Tor DO1 bzw. DO2 abgegeben. Von den Kippstufen DK1 und DK2 werden folglich die Signale pd und nd abgegeben, die im Gegensatz zu den Signalen pd' und nd' keine aufgeprägten Pulse mehr aufweisen. Die binären Signale pd und nd werden anschliessend im Binär/Ternär-Wandler BT wieder in ein HDB-3-Signal umgewandelt.

Wie eingangs beschrieben, wird durch das erfindungsgemässe Verfahren die Übertragungsrate erhöht und der Jitter reduziert. Durch eine in Fig. 5a,b dargestellte Logikschaltung LD2, welche aus den zugeführten Signalen den übertragenen Hilfsdatenstrom Sz' erzeugt, erfolgt eine weitere Reduktion des Jitters. Zusätzlich können durch die Schaltung Fehler bei der Datenübertragung erkannt werden.

Die in Fig.5a blockschaltbildartig gezeichnete Logikschaltung LD2 umfasst ein Logikmodul LM, einen Zähler Z und ein Oder-Tor DO3. Die aufgeprägten Pulse $pd_a$ und $nd_a$ werden dem Eingang E1 des Zählers Z über das Oder-Tor DO3 zugeführt. Dabei wird der Zähler Z durch den zuerst eintreffenden aufgeprägten Puls $pd_a$ oder $nd_a$ gestartet. Nach einer Zeitdauer $t_{max}$ gibt der Zähler Z von seinem Ausgang A1 ein Signal an das Logikmodul LM ab, welches in der Folge ein Bit = '1' an den übertragenen Hilfsdatenstrom Sz' abgibt, falls bis zum Ablauf der Zeitdauer $t_{max}$ nebst dem ersten aufgeprägten Puls $pd_a$ bzw. $nd_a$ auch der zweite aufgeprägte Puls $nd_a$ bzw. $pd_a$ eingetroffen ist. Die Zeitdauer $t_{max}$ wird dabei entsprechend dem maximal möglichen Abstand zwischen den aufgeprägten Pulsen $pd_a$ und $nd_a$ bemessen. Nach der Abgabe des Signals am Zählerausgang A1 wird über den Zählerausgang A2 ein Resetsignal an das Logikmodul LM abgegeben. Dabei wird der Zähler Z gleichzeitig mit dem Logikmodul LM zurückgesetzt, so dass die Logikschaltung LD2 für einen weiteren Empfang eines Paares aufgeprägter Pulse $pd_a$ und $nd_a$ bereit ist.

Nachfolgend wird die Logikschaltung LD2 anhand von Fig. 5b eingehend erläutert. Für zwei aufgeprägte Pulse $pd_a$ und $nd_a$ bzw. $nd_a$ und $pd_a$, die innerhalb der vorgegebenen Zeitdauer $t_{max}$ eintreffen, gibt die Logikschaltung LD2 ein Bit = '1' an den übertragenen Hilfsdatenstrom Sz' ab. Dabei wird mit dem zuerst eintreffenden aufgeprägten Puls $pd_a$ bzw. $nd_a$ über die Kippstufen DK4 und DK6 bzw. über die Kippstufen DK5 und DK7 und das Oder-Tor DO3 ein Zähler Z gestartet, der überwacht, dass der zweite Puls $nd_a$ bzw. $pd_a$ innerhalb einer vorbestimmten Zeitdauer erscheint. Über die Und-Tore DU5, DU6, DU7 und die Kippstufen DK9, DK10, DK11, DK12 werden in der Folge acht Taktzyklen abgezählt, nach deren Ablauf vom Ausgang der Kippstufe DK12 eine logisch '1' an einen Eingang des Und-Tores DU8 angelegt wird. Falls während den abgezählten acht Taktzyklen auch der zweite aufgeprägte Puls $nd_a$ bzw. $pd_a$ eingetroffen ist, liegen zu diesem Zeitpunkt alle Eingange des Und-Tores DU8 auf logisch '1', so dass in der Folge über das Und-Tor DU8 und die Kippstufe DK8 ein Bit = '1' an den übertragenen Hilfsdatenstrom Sz' abgegeben wird. Durch die logisch '1' am Ausgang der Kippstufe DK12 wird der Zähler und nach einer bis zwei Taktperioden werden nachfolgend alle Kippstufen der Logikschaltung LD2 zurückgesetzt, so dass die Logikschaltung LD2 für den Empfang eines weiteren Paares aufgeprägter Pulse bereit ist.

Ohne die erfindungsgemässe Schaltung setzt sich der Jitter des übertragenen Hilfsdatenstromes Sz' aus der wechselnden Verzögerung bei der Übertragung des ersten und zweiten Pulses zusammen. Indem das Hilfsdatenbit in der erfindungsgemässen Schaltung immer erst acht Taktzyklen nach Erscheinen des ersten der beiden aufgeprägten Pulses abgegeben wird, kann der resultierende auf den Jitter bei Jitter auf der Übertragung des ersten aufgeprägten Pulses$pd_a$ bzw. $nd_a$ reduziert werden.

Anhand des verwendeten ternären Codes für das Signal Sb und den vorhandenen Aufpräge-Bedingungen kann für das vorliegende Beispiel berechnet werden, dass der zweite aufgeprägte Puls $pd_a$ bzw. $nd_a$ dem ersten aufgeprägten Puls $pd_a$ bzw. $nd_a$ spätestens innerhalb von acht Taktzyklen folgen muss. Falls der zweite aufgeprägte Puls $pd_a$ bzw. $nd_a$ nicht innerhalb der abgezählten acht Taktzyklen erscheint, liegt ein Fehler vor. Die Logikschaltung LD2 wird dann zurückgesetzt, ohne dass ein Hilfsdatenbit abgegeben wird.

Die in den Schaltungen verwendeten Taktsignale ct bzw. dt werden jeweils aus den entsprechenden Hauptdatenströmen Sb bzw. Sc extrahiert.

**Patentansprüche**

1. Verfahren zur Übertragung eines Hilfsdatenstromes (Sz) in einem CMI - codierten Hauptdatenstrom (Sb), wobei für ein zu übertragendes Bit B(n) = '1' des Hilfsdatenstromes (Sz) zweimal die Bitkombination '10' übertragen wird, **dadurch gekennzeichnet**, dass vor der Übertragung des Hauptdatenstromes (Sb) für jedes Bit B(n) = '1' des Hilfsdatenstromes (Sz) im Hauptdatenstrom (Sb) die erste auf das Bit B(n) = '1' folgende Bitkombination '11' oder '00', die auf eine dazu inverse Bitkombination '00' bzw. '11' folgt und eine auf die modifizierte erste Bitkombination '11' bzw. '00' folgende und dazu inverse zweite Bitkombination '00'bzw. '11' durch eine Bitkombination '10' ersetzt werden, dass nach der Übertragung des Hauptdatenstromes (Sb) beim Eintreffen der ersten und der zweiten Bitkombination '10' festgestellt wird, ob diese anstelle von Bitkombinationen '00'oder '11' übertragen wurden, und dass, falls die ersetzten Bitkombinationen zueinander invers sind (00' und '11' bzw. 11' und '00'), das Bit B(n) = '1' nach einer Zeit $t_{max}$ ab dem Eintreffen der ersten Bitkombination '10' an den Hilfsdatenstrom (Sz') abgegeben wird.

2. Verfahren nach Anspruch 1, **dadurch gekennzeichnet**, dass die Zeit $t_{max}$ dem maximalen Abstand zweier Pulse pc = '1' und nc = '1' im HDB3 - Code entspricht.

3. Verfahren nach Anspruch 1 oder 2, **dadurch gekennzeichnet**, dass das 2Bit-MCMI-codierte Signal durch Umwandlung aus einem HDB3-codierten Signal erzeugt wird, indem die positiven und negativen Pulse (pc bzw. nc) des HDB3-codierten Signals getrennt als Pulse (pc' bzw. nc') einem HDB3-zu MCMI-Codewandler zugeführt werden, der für einen Puls (pc') die Bitkombination '11', für einen Puls (nc') die Bitkombination '00', beim Fehlen beider Pulse (pc' und nc') die Bitkombination '01' und beim gleichzeitigen Auftreten beider Pulse (pc' und nc') die Bitkombination '10' an die Übertragungsleitung abgibt und dass beim Eintreffen eines zu übertragenden Bits B(n) = '1' des Hilfsdatenstromes (Sz) beim nächsten Puls (pc oder nc), der einem Puls (nc bzw. pc) folgt, nebst einem Puls (pc' bzw. nc') gleichzeitig auch ein aufgeprägter Puls ($nc_a$ bzw. $pc_a$) erzeugt wird, und dass beim Eintreffen eines dem Puls (pc bzw. nc) folgenden Pulses (nc bzw. pc) nebst einem Puls (nc' bzw. pc') gleichzeitig auch ein aufgeprägter Puls ($pc_a$ bzw. $nc_a$) erzeugt wird.

4. Schaltungsanordnung zur Decodierung eines modifizierten CMI - codierten Signals (Sc) mit einem Decodierer (D), dem das Signal (Sc) zugeführt wird und der beim Eintreffen der Bitkombination '11' Pulse pd' = '1' und nd' = '0', der Bitkombination '00' Pulse pd' = '0' und nd' = '1', der Bitkombination '01' Pulse pd' = '0' und nd' = '0' und der Bitkombination '10' Pulse pd' = '1' und nd' = '1' an eine Logikschaltung (LD1) abgibt, die einen Speicher (DK3) aufweist, in dem festgehalten ist, welche der beiden Pulskombinationen pd' = '1' und nd' = '0' oder pd' = '0' und nd' = '1' zuletzt eingetroffen ist und die beim gleichzeitigen Eintreffen zweier Pulse pd' = '1' und nd' = '1' die zweite im Speicher (DK3) nicht abgelegte Pulskombination pd = '0' und nd = '1' bzw. pd = '1' und nd = '0' erstellt und den aus der Pulskombination pd' = '1' und nd' = '1' entnommenen aufgeprägten Puls $pd_a$ = '1' bzw. $nd_a$ = '1' einer weiteren Logikschaltung (LD2) zuführt, **dadurch gekennzeichnet**, dass in der Logikschaltung (LD2) ein mit einem Logikmodul (LM) verbundener Zähler (Z) vorgesehen ist, der durch den ersten aufgeprägten Puls $pd_a$ = '1' bzw. $nd_a$ = '1' gestartet wird und der nach einer Zeit $t_{max}$ ein Signal an das Logikmodul (LM) abgibt, welches daraufhin ein Bit = '1' an den Hilfsdatenstrom (Sz') abgibt, falls dem Logikmodul (LM) bis zum Ablauf der Zeit $t_{max}$, nebst dem ersten aufgeprägten Puls $pd_a$ = '1' bzw. $nd_a$ = '1', auch der zweite aufgeprägte Puls $nd_a$ = '1' bzw. $pd_a$ = '1' zugeführt wurde.

**Claims**

1. Method for transmitting an auxiliary data stream (Sz) in a CMI coded main data stream (Sb), wherein the bit configuration '10' is transmitted twice for a bit B(n) = '1' of the auxiliary data stream (Sz) to be transmitted, characterised in that, before transmission of the main data stream (Sb), for each bit B(n) = '1' of the auxiliary data stream (Sz) in the main data stream (Sb) the first bit configuration '11' or '00' which follows the bit B(n) = '1' and which follows the respective bit configuration '00' and '11' inverse to the said first bit configuration, and a respective second bit configuration '00' and '11' which follows the respective

EP 0 403 856 B1

modified first bit configuration '11' and '00' and is inverse thereto, are replaced by a bit configuration '10', in that, after transmission of the main data stream (Sb), upon the arrival of the first and second bit configuration '10' it is determined whether the latter were transmitted in place of bit configurations '00' or '11', and in that, if the replaced bit configurations are inverse relative to each other ('00' and '11' or '11' and '00'), the bit B(n) = '1' is delivered to the auxiliary data stream (Sz') after a time $t_{max}$ from the arrival of the first bit configuration '10'.

2. Method according to claim 1, characterised in that the time $t_{max}$ corresponds to the maximum interval between two pulses pc = '1' and nc = '1' in the HDB3 code.

3. Method according to claim 1 or 2, characterised in that the 2 bit MCMI coded signal is generated by conversion from an HDB3 coded signal, by the positive and negative pulses (pc and nc, respectively) of the HDB3 coded signal being supplied separately as pulses (pc' and nc', respectively) to an HDB3-to-MCMI code converter which delivers to the transmission line the bit configuration '11' for a pulse (pc'), the bit configuration '00' for a pulse (nc'), the bit configuration '01' when both pulses (pc' and nc') are missing and the bit configuration '10' when the two pulses (pc' and nc') appear simultaneously, and in that, upon the arrival of a bit B(n) = '1' of the auxiliary data stream (Sz) to be transmitted, at the next pulse (pc or nc) which follows a pulse (nc and pc, respectively), a superposed pulse ($nc_a$ and $pc_a$, respectively) is also generated simultaneously together with a pulse (pc' and nc', respectively), and in that, upon the arrival of a pulse (nc and pc, respectively) following the pulse (pc and nc, respectively), a superposed pulse ($pc_a$ and $nc_a$, respectively) is also generated simultaneously together with a pulse (nc' and pc', respectively).

4. Circuit arrangement for decoding a modified CMI coded signal (Sc), having a decoder (D) to which the signal (Sc) is supplied and which delivers to a logic circuit (LD1) pulses pd' = '1' and nd' = '0' upon the arrival of the bit configuration '11', pulses pd' = '0' and nd' = '1' upon the arrival of the bit configuration '00', pulses pd' = '0' and nd' = '0' upon the arrival of the bit configuration '01' and pulses pd' = '1' and nd' = '1' upon the arrival of the bit configuration '10', which logic circuit (LD1) has a memory (DK3) which retains the later of the two pulse configurations pd' = '1' and nd' = '0' or pd' = '0' and nd' = '1' to arrive and, when two pulses pd' = '1' and nd' = '1' arrive simultaneously, generates the respective second pulse configuration pd = '0' and nd = '1' or pd = '1' and nd = '0' not stored in the memory (DK3) and supplies the superposed pulse $pd_a$ = '1' and $nd_a$ = '1' derived from the pulse configuration pd' = '1' and nd' = '1' to a further logic circuit (LD2), characterised in that, in the logic circuit (LD2) there is provided a counter (Z) connected to a logic module (LM), which counter is started by the first superposed pulse $pd_a$ = '1' and $nd_a$= '1', respectively, and which, after a time $t_{max}$, delivers a signal to the logic module (LM) which thereupon delivers a bit = '1' to the auxiliary data stream (Sz') if the second superposed pulse $nd_a$ = '1' and $pd_a$ = '1', respectively, has also been supplied to the logic module (LM) together with the first superposed pulse $pd_a$ = '1' and $nd_a$ = '1', respectively, until the time $t_{max}$ has elapsed.

## Revendications

1. Procédé pour transmettre un flux (Sz) de données auxiliaires dans un flux (Sb) de données principales codé en code CMI (Coded Mark Inversion), la combinaison binaire "10" étant transmise deux fois pour un bit B(n) = "1", à transmettre, du flux (Sz) de données auxiliaires, caractérisé en ce que, avant la transmission du flux (Sb) de données principales, on remplace pour chaque bit B(n) = "1" du flux (Sz) de données auxiliaires dans le flux (Sb) de données principales, la première combinaison binaire "11" ou "00", qui suit le bit B(n) = "1" et qui suit une combinaison binaire "00" ou "11" inverse de celle-ci, et une deuxième combinaison binaire "00" ou "11" qui suit la première combinaison binaire modifiée "11" ou "00" et qui est inverse de celle-ci, par une combinaison binaire "10", après la transmission du flux (Sb) de données principales on détermine, lorsqu'apparaît la première et la deuxième combinaison "10" binaire, si ces combinaisons binaires ont été transmises à la place de combinaisons binaires "00" ou "11", et dans le cas où les combinaisons binaires remplacées sont inverses l'une de l'autre ("00" et "11" ou "11" et "00"), on fournit le bit B(n) = "1" au flux (Sz') de données auxiliaires après un temps $t_{max}$ à partir de l'instant où apparaît la première combinaison binaire "10".

2. Procédé suivant la revendication 1, caractérisé en ce que le temps $t_{max}$ correspond à l'intervalle maximal entre deux impulsions pc = "1" et nc = "1" en code HDB3.

7

3. Procédé suivant la revendication 1 ou 2, caractérisé en ce qu'on génère le signal codé en code MCMI à deux bits par transformation d'un signal codé en code HDB3, en envoyant les impulsions positives et négatives (pc et nc) du signal codé en code HDB3 séparément en tant qu'impulsions (pc' et nc') à un transcodeur de code HDB3 en code MCMI, qui pour une impulsion (pc') fournit la combinaison binaire "11", pour une impulsion (nc') fournit la combinaison binaire "00", en cas d'absence des deux impulsions (pc' et nc') fournit la combinaison binaire "01" et à l'apparition simultanée des deux impulsions (pc' et nc') fournit la combinaison binaire "10" à la ligne de transmission et on génère, à l'apparition d'un bit B(n) = "1" à transmettre, du flux (Sz) de données auxiliaires , lors de la prochaine impulsion (pc ou nc), qui suit une impulsion (nc ou pc), outre une impulsion (pc' ou nc') également en même temps une impulsion ($nc_a$ ou $pc_a$) imposée, et, à l'apparition d'une impulsion (nc ou pc), qui suit l'impulsion (pc ou nc), on génère outre une impulsion (nc' ou pc') en même temps aussi une impulsion ($pc_a$ ou $nc_a$) imposée.

4. Montage pour décoder un signal (Sc) codé en code CMI et modifié, avec un décodeur (D), auquel on envoie le signal (Sc) et qui fournit, à l'apparition de la combinaison binaire "11", des impulsions pd' = "1" et nd' = "0", à l'apparition de la combinaison binaire "00" des impulsions pd' = "0" et nd' = "1", à l'apparition de la combinaison binaire "01" des impulsions pd' = "0" et nd' = "0" et à l'apparition de la combinaison binaire "10" des impulsions pd' = "1" et nd' = "1", à un circuit logique (LD1), qui comporte une mémoire (DK3), dans laquelle est déterminée laquelle des deux combinaisons d'impulsions pd' = "1" et nd' = "0" ou pd' = "0" et nd' = 1 est apparue la dernière et qui, en cas d'apparition simultanée de deux impulsions pd' = "1" et nd' = "1", génère la deuxième combinaison d'impulsions pd = "0" et nd = "1" ou pd = "1" et nd = "0", qui n'est pas mémorisée dans la mémoire (DK3) et qui envoie l'impulsion $pd_a$ = "1" ou $nd_a$ = "1" imposée et obtenue à partir de la combinaison d'impulsions pd' = "1" et nd' = "1" à un autre circuit logique (LD2), caractérisé en ce qu'il est prévu dans le circuit logique (LD2) un compteur (Z), qui est relié à un module (LM) logique, qui est mis en marche par la première impulsion imposée $pd_a$ = "1" ou $nd_a$ = "1", et qui fournit, après un temps $t_{max}$, un signal au module logique (LM), lequel fournit ensuite un bit = "1" au flux (Sz') de données auxiliaires, dans le cas où il a été envoyé au module logique (LM) avant la fin du temps $t_{max}$, outre la première impulsion imposée $pd_a$ = "1" ou $nd_a$ = "1", également la deuxième impulsion imposée $nd_a$ = "1" ou $pd_a$ = "1".

Fig. 1

Fig. 4

Fig. 2

Fig. 3

EP 0 403 856 B1

11

Fig. 5a

Fig. 5b